# EUROPÄISCHE PATENTSCHRIFT

(11) **EP 0 815 913 B1**
(45) Veröffentlichungstag und Bekanntmachung des Hinweises auf die Patenterteilung: **07.11.2001**
(21) Anmeldenummer: 97110874.1
(22) Anmeldetag: 02.07.1997
(51) Int. Cl.: B01D 27/08, B01D 35/30

(54) **Filter**
Filter
Filtre

(30) Priorität: 03.07.1996 DE 19626648
(43) Veröffentlichungstag der Anmeldung: 07.01.1998
(73) Patentinhaber: Ing. Walter Hengst GmbH & Co. KG, 48147 Münster (DE)
(72) Erfinder: Schumann, Heiko, Dipl.-Ing., 48145 Münster (DE); Baumann, Dieter, Dipl.-Ing., 48268 Greven (DE)
(74) Vertreter: Habbel, Ludwig (Lutz), Dipl.-Ing.

(56) Entgegenhaltungen:
- EP-A- 0 529 782
- US-A- 3 931 015
- US-A- 3 959 137
- US-A- 4 390 425

## Beschreibung

Die Erfindung bezieht sich auf einen Filter gemäß dem Oberbegriff des Hauptanspruches.

Bei Öl- oder Wasserfiltern im Kraftfahrzeug ist es üblich, daß ein ventilgesteuerter schwerkraftbedingter Ablauf zwischen dem Filterbecher und dem Tank vorhanden ist, so daß bei einem Lösen des Deckels des Filters z. B. durch Abschrauben die Filterpatrone synchron mit bewegt werden kann. Während des Lösevorganges des Deckels wird die Filterpatrone bereits ein Stück weit aus dem Gehäuse gezogen, und hierdurch wird ein Ableitungskanal frühzeitig freigegeben, so daß das im Filtergehäuse befindliche Öl ausreichend Zeit hat aus dem Gehäuse durch den Ableitungskanal in den Tank, z. B. eine Motorölwanne, abzufließen (EP 314 915 B2). Bei Filtersystemen, bei denen aufgrund der Tanklage kein ventilgesteuerter schwerkraftbedingter Ablauf möglich ist, verbleibt also das Fluid im Filterbecher, und beim Entnehmen des Filtereinsatzes besteht die Gefahr, daß die Bedienungsperson durch heißes Fluid verletzt wird oder daß entsprechendes Fluid in die Umwelt gelangt und zu Verschmutzungen führen kann.

Aus der DE 34 15 522 C1 ist ein beheizbarer Kraftstofffilter für Dieselmotoren bekanntgeworden, bei dem der fest am Filterbecher angeordnete Deckel des Filterbechers als Auffangwanne ausgeführt ist. In diese Auffangwanne greift ein am Heizelement ausgebildeter Verdrängerkörper ein, der beim Filterbecherwechsel oberhalb des Deckels des Filterbechers einen Freiraum schafft, in den der im Heizelement befindliche Kraftstoff einfließen kann, so daß dieser Kraftstoff nicht nach unten ins Freie oder in den Kapselraum auslaufen kann.

Der Erfindung liegt die Aufgabe zugrunde, bei Filtersystemen ohne ventilgesteuerten schwerkraftbedingten Ablauf bei Öffnen des Filterbechers ein Absenken des im Filterbecher befindlichen Fluides zu erreichen, so daß beim Wechsel des Filtereinsatzes weder Verletzungen der Bedienungsperson auftreten können, noch Fluid in die Umwelt gelangen kann und schließlich kein Fluid beim Filterwechsel verlorengeht.

Diese der Erfindung zugrundeliegende Aufgabe wird durch die Lehre des Hauptanspruches gelöst.

Vorteilhafte Ausgestaltungen der Erfindung sind in den Unteransprüchen erläutert.

Mit anderen Worten ausgedrückt wird vorgeschlagen, daß zusammen mit dem Filtereinsatz innerhalb des Filterbechers Verdrängerkörper vorhanden sind, die beim Aufschrauben des Filterbechers zusammen mit dem Filtereinsatz mit angehoben werden, so daß dadurch durch den von dem Verdrängerkörper freigegebenen Raum Raum geschaffen wird, in den das im Filterbecher vorhandene Fluid zurückfließen kann.

Gemäß einem vorteilhaften Merkmal der Erfindung ist dabei vorgesehen, daß der oder die Verdrängerkörper mit dem Deckel unmittelbar oder mittelbar fest verbunden sind, so daß automatisch bei Betätigen des Deckels die Verdrängerkörper mit hochgehoben werden.

Sind die Verdrängerkörper am Filtereinsatz angeordnet, so ist der Filtereinsatz mit dem Deckel fest verbunden, so daß hierdurch die Verbindung zwischen Deckel und Verdrängerkörper hergestellt wird, so daß auch bei dieser Ausführungsform der Verdrängerkörper bei Betätigen des Deckels angehoben wird.

Eine weitere Lösungsmöglichkeit der Lehre des Hauptanspruches der Erfindung ist darin zu sehen, daß ein oder mehrere Schwimmerkörper im Filterbecher außerhalb des Filtereinsatzes vorgesehen sind und ggf. durch den Deckel niedergedrückt werden, wobei diese Schwimmerkörper eine Dichte aufweisen, die kleiner als die des Fluides im Becherfilter ist. Wird nunmehr der Deckel des Becherfilters geöffnet, schwimmen die Schwimmerkörper auf und das von ihnen vorher verdrängte Fluid kann absinken und dadurch wird der Fluidspiegel im Becherfilter automatisch bei Öffnen des Deckels gesenkt.

Ausführungsbeispiele der Erfindung werden nachfolgend anhand der Zeichnungen erläutert. Die Zeichnungen zeigen dabei in
- Fig. 1: eine Ausführungsform, bei welcher die Verdrängerkörper unmittelbar mit dem Deckel verbunden sind und in
- Fig. 2: eine Ausführungsform, bei welcher die Verdrängerkörper mittelbar mit dem Deckel verbunden sind.

In den Zeichnungen wird ein Becherfilter 1 gezeigt, der einen Filterbecher 3 aufweist, der von einem Deckel 4 verschlossen ist, wobei bei dem dargestellten Ausführungsbeispiel ein relativ langer Schraubweg zwischen Deckel 4 und Filterbecher 3 vorhanden ist, wobei außerdem der Deckel durch eine Dichtung 8, die an der Außenseite des Einsatzteiles des Deckels 4 angeordnet ist, gegenüber der Innenseite des Filterbechers 3 abgedichtet wird.

Innerhalb des Filterbechers 3 ist ein Filtereinsatz 2 vorgesehen, der bei dem dargestellten Ausführungsbeispiel aus einer Filterpatrone besteht, die einen inneren Stützdom 9 aufweist.

Der Filtereinsatz 2 ist beispielsweise über eine Clipsverbindung mit der Innenseite des Deckels 4 verbunden, so daß bei Aufschrauben des Deckels 4 gleichzeitig der Filtereinsatz 2 mit angehoben und dann mit dem Deckel entnommen werden kann.

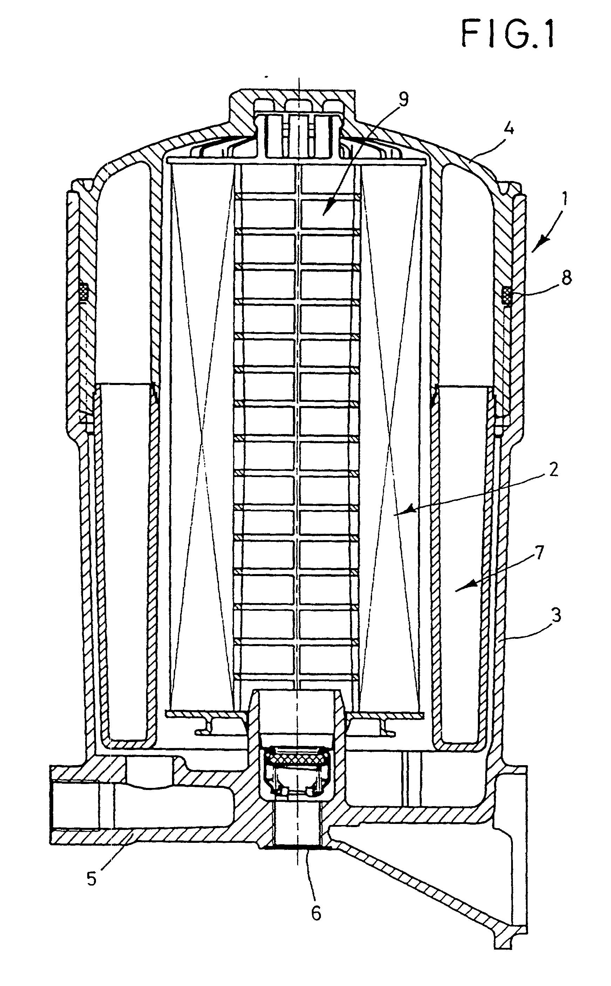

Bei der in Fig. 1 dargestellten Ausführungsform ist weiterhin der Deckel 4 mit einem vorzugsweise umlaufenden Verdrängerkörper 7 ausgerüstet, der zwischen der Innenseite des Filterbechers 3 und der Außenseite des Filtereinsatzes 2 angeordnet ist. Der Verdrängerkörper 7 ist allseitig geschlossen, so daß ein Eindringen von Fluid in den durch den Verdrängerkörper 7 gebildeten Raum nicht möglich ist. Bei 5 ist der Zulauf des Fluids zum Becherfilter 1 und bei 6 der Ablauf des Fluides vom Becherfilter 1 erkennbar, wobei sowohl in den Zulauf 5 wie auch in den Ablauf 6 entsprechende Rückschlagventile eingeschaltet sein können, die beispielsweise das Innere des Filterbechers 3 beim Aufschrauben des Deckels vom Fluidkreislauf abschließen.

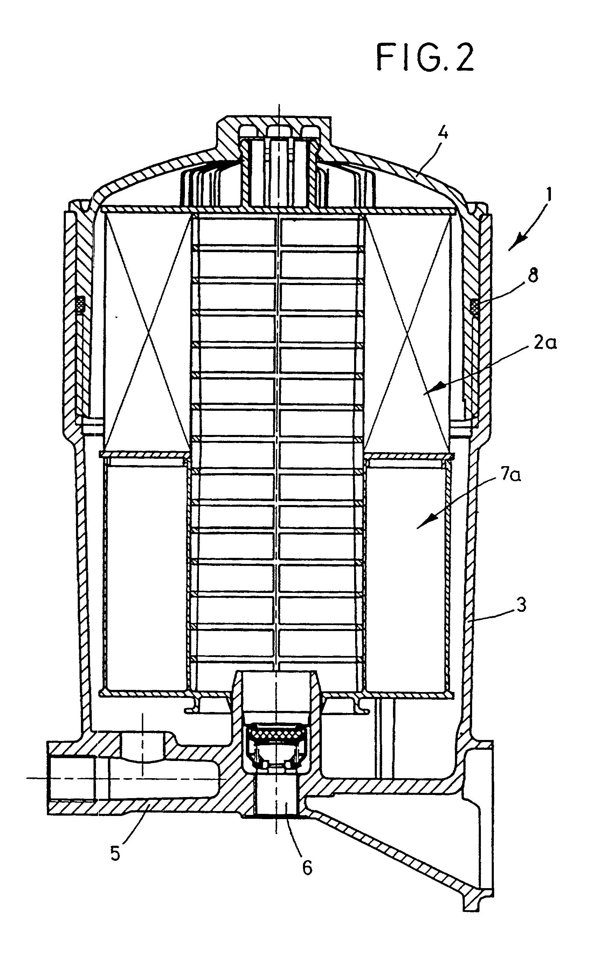

Bei der Ausführungsform gemäß Fig. 2 ist der Filtereinsatz 2a durch umlaufende Verdrängerkörper 7a verlängert, die dicht und hohl ausgebildet sind und die somit über den Filtereinsatz 2a mit dem Deckel 4 verbunden sind. Die Verdrängerkörper 7a können im unteren Teil des Filterbechers 3 vorgesehen sein, aber genausogut können die Verdrängerkörper 7a auch im oberen Bereich des Filterbechers 3 angeordnet werden und der Filtereinsatz 2a dann im unteren Bereich.

Bei den beiden dargestellten Ausführungsformen der Erfindung wird also dann, wenn der Deckel 4 aufgeschraubt wird, gleichzeitig der Filtereinsatz 2 bzw. 2a mit angehoben und dadurch der von den Verdrängerkörpern 7 bzw. 7a eingenommene Raum innerhalb des Fluides freigegeben, so daß nunmehr das Fluid innerhalb des Filterbechers 3 absinken kann und der Fluidspiegel gegenüber seinem üblichen Höchststand nunmehr erheblich abgesenkt wird. Hierdurch ist ein problemloses Entnehmen des Filtereinsatzes möglich, und da der Fluidspiegel tiefer als die Oberkante des Filterbechers liegt, ist auch ein Eintreten von Fluid in die Umwelt ausgeschlossen.

## Patentansprüche

1. Filter (1) ohne ventilgesteuerte schwerkraftbedingte Leerlaufleitung mit einem auswechselbaren Filtereinsatz (2), einem Filterbecher (3) mit aufsetzbarem Deckel (4) und einer jeweils unten liegenden Zulauf- und Ablaufleitung (5, 6), **gekennzeichnet durch** einen oder mehrere Verdrängerkörper (7, 7a) innerhalb des Filterbechers (3), die beim Filterwechsel mit entnehmbar sind.

2. Filter nach Anspruch 1, **dadurch gekennzeichnet, daß** der oder die Verdrängerkörper (7, 7a) mittelbar oder unmittelbar mit dem Deckel (4) fest verbunden sind.

3. Filter nach Anspruch 1 oder 2, **dadurch gekennzeichnet, daß** der oder die Verdrängerkörper (7a) mit dem Filtereinsatz (2) verbunden sind.

4. Filter nach einem der vorhergehenden Ansprüche, **dadurch gekennzeichnet, daß** ein oder mehrere Schwimmerkörper im Filterbecher außerhalb des Filtereinsatzes vorgesehen sind, die bei Öffnen des Deckels aufschwimmen.

## Claims

1. A filter (1) without a valve-controlled, gravity-actuated drainage line, comprising a replaceable filter insert (2), a filter bowl (3) with a cover (4) which can be placed thereon, and an inflow line and an outflow line (5, 6) which are each situated at the bottom, **characterised by** one or more displacement bodies (7, 7a) which are situated inside the filter bowl (3) and which when the filter is replaced can be removed therewith.

2. A filter according to claim 1, **characterised in that** the displacement body or bodies (7, 7a) are fixedly attached, directly or indirectly, to the cover (4).

3. A filter according to claims 1 or 2, **characterised in that** the displacement body or bodies (7a) are attached to the filter insert (2).

4. A filter according to any one of the preceding claims, **characterised in that** one or more float bodies, which float upwards when the cover is opened, are provided in the filter bowl outside the filter insert.

## Revendications

1. Filtre (1) sans conduite de marche à vide commandée par une soupape et soumise à la force de gravité, comprenant une cartouche filtrante (2) interchangeable, un boîtier à filtre (3) avec un couvercle (4) amovible et une conduite d'admission et une conduite d'évacuation (5, 6) situées chacune dans la partie inférieure, **caractérisé par** un ou plusieurs corps de refoulement (7, 7a) montés à l'intérieur du boîtier à filtre (3), qui peuvent également être retirés à chaque changement de filtre.

2. Filtre selon la revendication 1, **caractérisé en ce que** le ou les corps de refoulement (7, 7a) sont assemblés de manière fixe indirectement ou directement au couvercle (4).

3. Filtre selon la revendication 1 ou 2, **caractérisé en ce que** le ou les corps de refoulement (7a) est/sont assemblé(s) à la cartouche filtrante (2).

4. Filtre selon l'une quelconque des revendications précédentes, **caractérisé en ce qu'**un ou plusieurs corps flottants sont prévus dans le boîtier à filtre, à l'extérieur de la cartouche filtrante, lesquels remontent à la surface au moment de l'ouverture du couvercle.
